# EUROPÄISCHE PATENTSCHRIFT

(11) **EP 3 273 543 B1**
(45) Veröffentlichungstag und Bekanntmachung des Hinweises auf die Patenterteilung: **12.05.2021**
(21) Anmeldenummer: 17305900.7
(22) Anmeldetag: 11.07.2017
(51) Int. Cl.: H01R 9/26, H01R 4/48, H01R 25/14, H02B 1/21

(54) **ANSCHLUSSEINRICHTUNG ZUM ANSCHLUSS EINES LEITERS AN EINE SAMMELSCHIENE**
CONNECTION DEVICE FOR CONNECTING A CONDUCTOR TO A BUSBAR
DISPOSITIF DE RACCORDEMENT D'UN CONDUCTEUR À UNE BARRE OMNIBUS

(30) Priorität: 21.07.2016 DE 102016113524
(43) Veröffentlichungstag der Anmeldung: 24.01.2018
(73) Patentinhaber: Hager Electro GmbH & Co. KG, 66440 Blieskastel (DE)
(72) Erfinder: DISSEL, Klaus, 66663 MERZIG (DE); MÜLLER, Michael, 66271 KLEINBLITTERSDORF (DE); SEITZ, Lukas, 66424 HOMBURG (DE); ZIMMERMANN, Michael, 66399 MANDELBACHTAL (DE)
(74) Vertreter: Cabinet Nuss

(56) Entgegenhaltungen:
- EP-A1- 0 694 938
- EP-A1- 1 439 621
- DE-A1- 19 626 390
- DE-U1- 20 119 510
- DE-U1- 20 305 313
- US-A- 4 591 228
- US-A1- 2006 030 222

## Beschreibung

Die Erfindung betrifft eine Anschlusseinrichtung zum Anschluss eines Leiters an eine Sammelschiene, insbesondere eine Sammelschiene einer Verteilereinrichtung. Die Erfindung betrifft ferner eine Anschlussvorrichtung umfassend eine Festlegevorrichtung und wenigstens eine erfindungsgemäße Anschlusseinrichtung.

Aus dem Stand der Technik sind Anschlussvorrichtungen bekannt, die zum Anschluss eines einzelnen Leiters an einer einzelnen Sammelschiene geeignet sind. Diese Anschlussvorrichtungen dienen sowohl zur mechanischen als auch zur elektrischen Verbindung des Leiters mit der Sammelschiene. Zum Anschluss des Leiters und der Sammelschiene an die Anschlussvorrichtung werden hauptsächlich Schraubklemmanschlusselemente verwendet.

Aus der Druckschrift DE 10 2008 032 037 A1 ist eine Anschlussvorrichtung bekannt, die aus einen Blechstanzteil gefertigt ist und geeignet ist, ein Teilstück der Sammelschiene formschlüssig aufzunehmen und mit einem abisolierten Ende des Leiters verbunden zu werden.

Aus der Druckschrift EP 1 322 000 A2 ist eine Anschlussvorrichtung bekannt, die einerseits mit einem Teilstück der Sammelschiene verbindbar ist und andererseits einen Zugfederanschluss umfasst, der mit einem Endstück des Leiters verbunden werden kann. Die Anschlussvorrichtung umfasst ein Isolierstoffgehäuse, das mit einem Betätigungshebel versehen ist, mittels dem der Zugfederanschluss zum Einführen des Leiters geöffnet werden kann.

DE 196 26 390 A1 offenbart eine Anschlussvorrichtung mit mehreren hintereinander angeordneten Klemmfedern, die in einem gemeinsamen Isolierstoffgehäuse untergebracht sind.

Aus US 4,591,228 A sind nebeneinander anordenbare Überspannungsschutzschalter bekannt, die mittels einer Rastverbindung miteinander verbindbar sind.

DE 201 19 510 U1 offenbart eine Anschlusseinrichtung zum Anschluss mehrerer Leiter an eine einzige Sammelschiene bekannt.

Aus EP 0 694 938 A1 ist ein Überspannungsschutzschalter bekannt, der aus einem Überspannungsmodul und einem Differenzialmodul gebildet ist, die nebeneinander angeordnet sind und miteinander elektrisch verbunden sind.

EP 1 439 621 A1 offenbart einen Überspannungsschutzschalter, der mit Stromschienen unterschiedlicher Dicke mechanisch und elektrisch verbindbar ist.

Es ist die Aufgabe der vorliegenden Erfindung, die bekannten Anschlussvorrichtungen zu verbessern.

Erfindungsgemäß wird diese Aufgabe durch eine Anschlusseinrichtung nach Anspruch 1 und Anschlussvorrichtung nach Anspruch 7 gelöst.

Die erfindungsgemäße Anschlusseinrichtung umfasst wenigstens ein Anschlusselement zum Anschluss eines Leiters an einer Sammelschiene und ein das Anschlusselement umgebendes Isolierstoffgehäuse. Das Anschlusselement weist eine Leiterklemme und eine mit der Leiterklemme elektrisch verbundene Sammelschienenklemme auf. Die Anschlusseinrichtung ist durch eine Bewegung in einer Aufsteckrichtung auf wenigstens eine Sammelschiene, die annähernd parallel zu einer Erstreckungsrichtung verläuft, aufsteckbar. Das Isolierstoffgehäuse weist eine Aufstecknut aufweist, die zur Aufnahme eines Teilstücks der Sammelschiene geeignet ist. Die Sammelschienenklemme weist wenigstens einen Schenkel auf, der in die Aufstecknut hineinragt und geeignet ist, mit dem Teilstück in Berührung gebracht zu werden. Die Anschlusseinrichtung ist ausgebildet, um an einer Anschlussleiste und/oder an einer weiteren Anschlusseinrichtung und/oder an einer Festlegevorrichtung und/oder an einer Wand eines Gehäuses einer Verteilereinrichtung festgelegt zu werden.

Durch die erfindungsgemäße Ausgestaltung ist die Anschlussvorrichtung in einfacher und sicherer Weise mit den Sammelschienen und den Leitern verbindbar. Aufgrund des die Anschlusselemente umgebenden Isolierstoffgehäuses sind die Anschlusselemente elektrisch isoliert und ein die Anschlussvorrichtung installierender Monteur wird vor Stromschlägen geschützt.

Vorzugsweise weist der Leiter einen Querschnitt auf, der weiterhin vorzugsweise eine Fläche aufweist, die zwischen ca. 1,5 mm² und ca. 35 mm² beträgt.

In einer bevorzugten Ausgestaltung weist der Querschnitt des Leiters einen Durchmesser auf, der zwischen ca. 1,0 mm und ca. 7 mm beträgt.

Vorzugsweise umfasst die Anschlussvorrichtung ein Verstärkungselement, dass die Sammelschienenklemme zumindest teilweise umgibt und/oder mit der Sammelschienenklemme in Berührung ist, wobei und das Verstärkungselement weiterhin vorzugsweise aus Stahl gefertigt ist.

In einer bevorzugten Ausgestaltung ist die Sammelschienenklemme und/oder das Verstärkungselement im Querschnitt im Wesentlichen schwalbenschwanzförmig ausgebildet.

Alternativ kann die Sammelschieneklemme und/oder das Verstärkungselement im Querschnitt im Wesentlichen rechteckförmig oder omegaförmig ausgebildet sein.

Vorzugsweise ist das Verstärkungselement durch Umformung, weiterhin vorzugsweise durch Biegen eines Stanzteils gebildet.

Diese Ausgestaltung bietet den Vorteil, dass das Verstärkungselement in einfacher und kostengünstiger Weise hergestellt werden kann.

In einer bevorzugten Ausgestaltung ist die Leiterklemme und/oder die Sammelschienenklemme als Klemmelement ausgebildet ist.

Diese Ausgestaltung ermöglicht ein einfaches und sicheres Verbinden der Anschlussvorrichtung mit den Sammelschienen.

Vorzugsweise weist das Isolierstoffgehäuse gegenüberliegend von der Leiterklemme jedes Anschlusselements jeweils eine Einstecköffnung auf, die geeignet ist, von dem Leiter durchdrungen zu werden, um den Leiter mit der Leiterklemme elektrisch leitend zu verbinden.

Diese Ausgestaltung erleichtert das Verbinden der Leiterklemme mit dem Leiter.

In einer bevorzugten Ausgestaltung ist die Leiterklemme und/oder die Einstecköffnung ausgebildet, um eine Einstecken des Leiters in die Leiterklemme in einer Einsteckrichtung zu ermöglichen, wobei die Einsteckrichtung im Wesentlichen in einer Ebene liegt, die im Wesentlichen orthogonal zur Erstreckungsrichtung verläuft, und wobei die Einsteckrichtung und die Aufsteckrichtung einen Winkel bilden, der zwischen 30° und 150°, vorzugsweise zwischen 90° und 150°, weiterhin vorzugsweise ca. 120° aufweist.

Diese Ausgestaltung erleichtert ebenfalls das Verbinden des Leiters mit der Leiterklemme.

Vorzugsweise weist das Isolierstoffgehäuse wenigstens eine Ausnehmung auf, in welche die Aufstecknut mündet.

Diese Ausgestaltung erleichtert das Aufstecken der Anschlussvorrichtung auf die Sammelschienen.

Gemäß dieser Ausgestaltung kann die Anschlusseinrichtung mit den Sammelschienen verbunden werden, indem die Anschlusseinrichtung derart quer zur Erstreckungsrichtung und zur Aufsteckrichtung bewegt wird, dass die Teilstücke der Sammelschienen in der Ausnehmung aufgenommen werden, und anschließend die Anschlusseinrichtung in Aufsteckrichtung bewegt wird, bis die Teilstücke in den Aufstecknuten aufgenommen sind.

In einer bevorzugten Ausgestaltung weist das Isolierstoffgehäuse wenigstens eine Einführschräge auf, die in die Ausnehmung einer benachbart zu der Anschlusseinrichtung angeordneten weiteren Anschlusseinrichtung mündet und geeignet ist, das Teilstück in die Ausnehmung der weiteren Anschlusseinrichtung zu führen.

Vorzugsweise weist das Isolierstoffgehäuse wenigstens eine Einführschräge auf, die in die Ausnehmung einer in Aufsteckrichtung hinter der Anschlusseinrichtung angeordneten weiteren Anschlusseinrichtung mündet und geeignet ist, das Teilstück in die Ausnehmung der weiteren Anschlusseinrichtung zu führen.

Durch diese Ausgestaltung wird ermöglicht, dass das Teilstück in die Ausnehmung geführt werden kann, wenn die Anschlusseinrichtung(en) quer zur Aufsteckrichtung und quer zur Erstreckungsrichtung auf die Sammelschienen zubewegt wird.

In einer bevorzugten Ausgestaltung umfasst die Anschlusseinrichtung ein Verstärkungselement, das die Sammelschienenklemme zumindest teilweise umgibt und vorzugsweise aus Stahl gefertigt ist.

Vorzugsweise umfasst die Anschlusseinrichtung wenigstens ein Verbindungselement, welches dazu ausgebildet ist, die Anschlusseinrichtung mit der Festlegevorrichtung und/oder der Anschlussleiste und/oder der weiteren Anschlusseinrichtung und/oder der Wand des Gehäuses der Verteilereinrichtung zu verbinden. Weiterhin vorzugsweise ist das Verbindungselement in einer durch Nebeneinanderstellung einer in dem Isolierstoffgehäuse eingebrachten ersten Aussparung und einer in der Festlegevorrichtung und/oder in einem Isolierstoffgehäuse der weiteren Anschlusseinrichtung und/oder in der Anschlussleiste und/oder in der Wand des Gehäuses der Verteilereinrichtung eingebrachten zweiten Aussparung gebildete Vertiefung aufgenommen, um die Anschlusseinrichtung an der Festlegevorrichtung und/oder der Anschlussleiste und/oder der weiteren Anschlusseinrichtung und/oder der Wand des Gehäuses der Verteilereinrichtung festzulegen.

In einer bevorzugten Ausgestaltung ist das Verbindungselement in der ersten Aussparung aufgenommen, um eine Nut-Feder-Verbindung zwischen der Anschlusseinrichtung sowie der Festlegevorrichtung und/oder der Anschlussleiste und/oder dem Isolierstoffgehäuse der weiteren Anschlusseinrichtung und/oder der Wand des Gehäuses der Verteilereinrichtung zu bilden.

In einer bevorzugten Ausgestaltung umfasst das Verbindungselement einen Handhabungsabschnitt, mittels welchem das Verbindungselement aus der Vertiefung herausgezogen werden kann.

Vorzugsweise erstreckt sich die erste Aussparung und/oder die zweite Aussparung und/oder die Vertiefung im Wesentlichen in einer Richtung, die bezüglich der Aufsteckrichtung windschief ist oder diese schneidet.

In einer bevorzugten Ausgestaltung ist die erste Aussparung in einer Seitenwand des Isolierstoffgehäuses eingebracht.

Die Erfindung betrifft ferner eine Anschlussvorrichtung, welche eine Festlegevorrichtung und wenigstens eine erfindungsgemäße Anschlusseinrichtung umfasst. Die Anschlusseinrichtung ist an der Festlegevorrichtung festgelegt ist. Die Festlegevorrichtung ist mit wenigstens einer Aufstecknut zur Aufnahme eines Teilstücks der Sammelschiene versehen. Die Aufstecknut der Festlegevorrichtung liegt der Aufstecknut der Anschlusseinrichtung gegenüberliegt und weist vorzugsweise einen annähernd gleichen Querschnitt wie die Aufstecknut der Anschlusseinrichtung auf.

In einer bevorzugten Ausgestaltung der Anschlussvorrichtung ist diese aus wenigstens zwei Anschlusseinrichtungen und einer Festlegevorrichtung gebildet.

Vorzugsweise umfasst die Festlegevorrichtung wenigstens eine Festlegefläche, an welche die Anschlusseinrichtung festgelegt ist.

In einer bevorzugten Ausgestaltung ist das Verbindungselement in der durch Nebeneinanderstellung der in dem Isolierstoffgehäuse eingebrachten ersten Aussparung und der in der Festlegevorrichtung eingebrachten zweiten Aussparung gebildete Vertiefung aufgenommen, um die Anschlusseinrichtung an der Festlegevorrichtung festzulegen.

Vorzugsweise ist die zweite Aussparung an der Festlegefläche angeordnet.

In einer bevorzugten Ausgestaltung umfasst Anschlussvorrichtung wenigstens zwei Anschlusseinrichtungen, die in Aufsteckrichtung hintereinander und/oder zumindest annähernd aneinandergrenzend angeordnet sind, wobei die Einführschräge eines der Anschlusseinrichtungen in die Ausnehmung der weiteren Anschlusseinrichtung mündet und geeignet ist, das Teilstück in die Ausnehmung der weiteren Anschlusseinrichtung zu führen.

Vorzugsweise weist die Festlegevorrichtung wenigstens eine Ausnehmung auf, welche in die Aufstecknut der Festlegevorrichtung mündet, wobei die Ausnehmung der Festlegevorrichtung der Ausnehmung der Anschlusseinrichtung gegenüberliegt und vorzugsweise einen annähernd gleichen Querschnitt wie die Ausnehmung der Anschlusseinrichtung aufweist.

In einer bevorzugten Ausgestaltung weist die Festlegevorrichtung wenigstens eine Festlegeeinrichtung auf, welche einen Anliegeabschnitt und einen Federabschnitt umfasst, wobei der Federabschnitt elastisch verformbar ist und wobei der Anliegeabschnitt geeignet ist, in einer Festlegestellung an der Sammelschiene anzuliegen, um ein Verschieben der Anschlussvorrichtung entgegen der Aufsteckrichtung zu verhindern, und in einer Freigabestellung von der Sammelschiene beabstandet zu sein, um ein Verschieben der Anschlussvorrichtung entgegen der Aufsteckrichtung zu ermöglichen.

Vorzugsweise weist die Festlegevorrichtung wenigstens eine Sollbruchstelle auf, die sich vorzugsweise im Wesentlichen quer zur Aufsteckrichtung und/oder quer zur Erstreckungsrichtung erstreckt.

Gemäß dieser Ausgestaltung ist es möglich, die Festlegevorrichtung in einfacher Weise derart zu kürzen, sodass mittels dieser eine Anschlussvorrichtung der gewünschten Länge (in Aufsteckrichtung) gebildet werden kann, die beispielsweise mit einer einzigen Sammelschiene oder mit einer Mehrzahl an Sammelschienen verbindbar ist.

Einzelheiten und weitere Vorteile der erfindungsgemäßen Anschlusseinrichtung und der erfindungsgemäßen Anschlussvorrichtung werden anhand des nachfolgend beschriebenen Ausführungsbeispiels erläutert. Dabei veranschaulichen im Einzelnen:
Fig. 1: zeigt eine perspektivische Ansicht einer Anschlussleiste, an welche eine Anschlusseinrichtung nach dem Ausführungsbeispiel festlegbar ist;
Fig. 2a: zeigt eine perspektivische Ansicht eines Anschlusselements der Anschlusseinrichtung nach dem Ausführungsbeispiel in einer ersten Variante, wobei ein Leiter mit der Leiterklemme verbunden ist;
Fig. 2b: zeigt eine perspektivische Ansicht eines Anschlusselements der Anschlusseinrichtung nach dem Ausführungsbeispiel in einer zweiten Variante, wobei ein Leiter mit der Leiterklemme verbunden ist;
Fig. 3: zeigt eine perspektivische Ansicht der Anschlussleiste aus Fig. 1, an welche Anschlusseinrichtungen nach dem Ausführungsbeispiel festgelegt sind;
Fig. 4: zeigt eine weitere perspektivische Ansicht der Anschlussleiste aus Fig. 1, an welche Anschlusseinrichtungen nach dem Ausführungsbeispiel festgelegt sind;

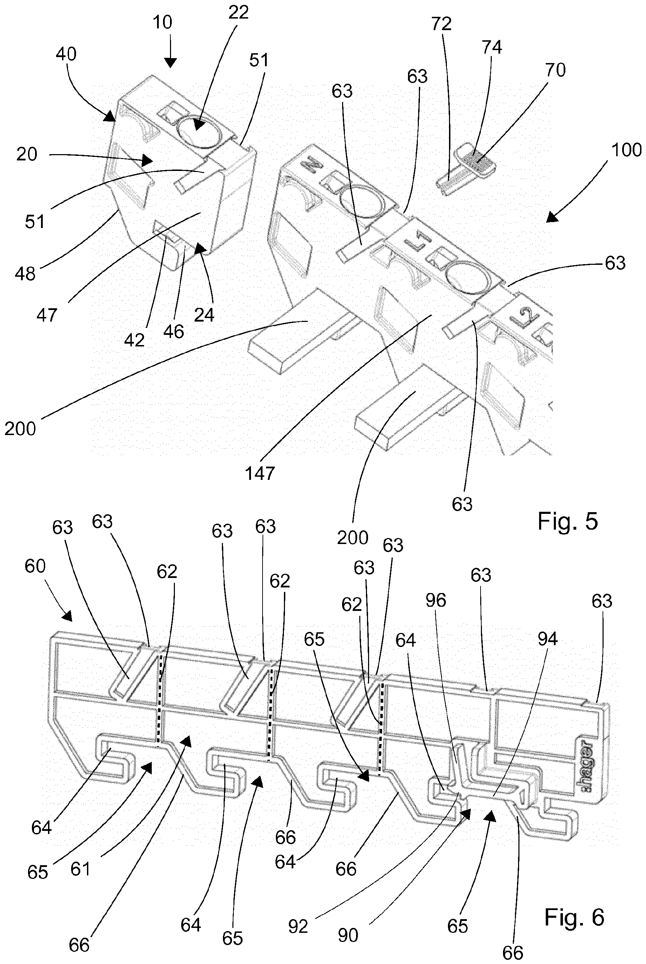

Fig. 5: veranschaulicht, wie eine Anschlusseinrichtung nach dem Ausführungsbeispiel mittels eines Verbindungselements an der Anschlussleiste festgelegt wird;
Fig. 6: zeigt eine perspektivische Seitenansicht einer Festlegevorrichtung, an welcher eine Anschlusseinrichtung nach dem Ausführungsbeispiel festlegbar ist;

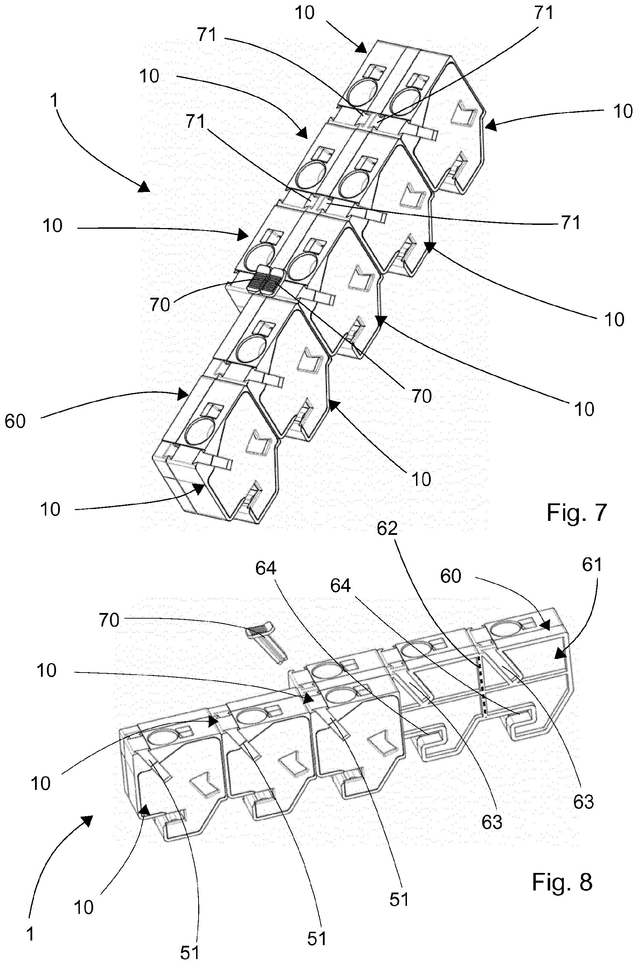

Fig. 7: zeigt eine perspektivische Ansicht einer Anschlussvorrichtung nach dem ersten Ausführungsbeispiel, die eine Festlegevorrichtung und mehrere an dieser festgelegte Anschlusseinrichtungen umfasst;
Fig. 8: zeigt eine weitere Ansicht der Anschlusseinrichtung aus Fig. 7.

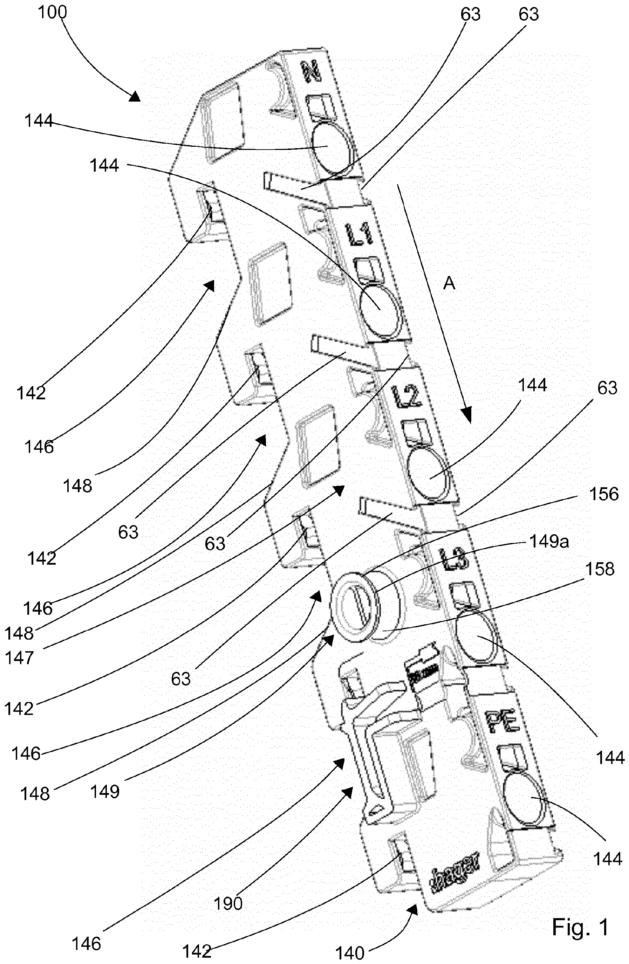

Fig. 1 zeigt eine perspektivische Ansicht einer Anschlussleiste 100, an welche eine Anschlusseinrichtung 10 nach dem Ausführungsbeispiel festlegbar ist. Die Anschlussleiste 100 umfasst ein Gehäuse 140. Die Anschlussleiste 100 ist durch eine Bewegung in einer Aufsteckrichtung A auf wenigstens zwei Sammelschienen 200 aufsteckbar. Die Sammelschienen 200 verlaufen annähernd parallel zu einer Erstreckungsrichtung.

Die Anschlussleiste 100 nach kann wenigstens ein Anschlusselement 120 zum Anschluss eines Leiters 300 an einer Sammelschiene 200 und ein das Anschlusselement 120 umgebendes Isolierstoffgehäuse 40 umfassen. Das Anschlusselement 120 kann eine Leiterklemme 122 und eine mit der Leiterklemme 122 elektrisch verbundene Sammelschienenklemme 124 aufweisen. Die in Figur 1 wiedergegeben Anschlussleiste 100 umfasst fünf solche Anschlusselemente 120, die in Aufsteckrichtung A im Wesentlichen hintereinander angeordnet sind.

Das Gehäuse 140 umfasst fünf Aufstecknuten 142, die jeweils zur Aufnahme eines Teilstücks einer der Sammelschienen 200 geeignet sind.

Die Anschlussleiste 100 ist auf fünf annähernd parallel in Erstreckungsrichtung verlaufenden Sammelschienen 200 aufsteckbar.

Die Sammelschienen 200, insbesondere die Sammelschienen 200 einer Verteilereinrichtung werden normalerweise in einem gleichbleibenden Abstand zueinander angeordnet, der beispielsweise 40 Millimeter betragen kann.

Die Anschlussleiste 100 dient zur elektrisch leitenden Verbindung jeweils eines Leiters 300 mit einer Sammelschiene 200.

Vorzugsweise weist das Gehäuse 140 wenigstens eine Ausnehmung 146 auf, in welche eine der Aufstecknuten 142 mündet. Wie insbesondere die Fig. 1 zu erkennen gibt, weist die Anschlussleiste 100 nach dem ersten Ausführungsbeispiel vier Ausnehmungen 146 auf, in welche vorzugsweise jeweils eine der fünf Aufstecknuten 142 mündet.

Vorzugsweise weist das Gehäuse 140 wenigstens eine Einführschräge 148 auf, die in die Ausnehmung 146 mündet und geeignet ist, das Teilstück in die Ausnehmung 146 zu führen. Weiterhin vorzugsweise weist das Gehäuse 140 für jede Ausnehmung 146 jeweils eine Einführschräge 148 auf. Das Gehäuse 140 der in Fig. 1 wiedergegebenen Anschlussleiste 100 ist mit fünf Einführschrägen 148 versehen, die vorzugsweise jeweils in eine der vier Ausnehmungen 146 münden. Diese Ausgestaltung erleichtert das Aufstecken der Anschlussleiste 100 auf die Sammelschienen 200. Anschlusseinrichtung 100 in einer quer zur Erstreckungsrichtung und quer zur Aufsteckrichtung A verlaufenden Richtung auf die Sammelschienen 200 zubewegt, so können die Sammelschienen 200 entlang der Einführschrägen 148 gleiten, um in die Ausnehmungen 146 geführt zu werden.

Um die Anschlussleiste 100 mit den Sammelschienen 200 zu verbinden, gleiten die Teilstücke der Sammelschienen 200 in die Aufstecknuten 142. Dies wird mittels einer Verschiebung der Anschlussleiste 100 in Aufsteckrichtung A erreicht. Vorzugsweise umfasst das Gehäuse 140 wenigstens einen ersten Auflageabschnitt 156, der geeignet ist, eine erste Auflage für einen durch ein Werkzeug und einen benachbart zum Teilstück angeordneten Sammelschienenabschnitt 204 als Angelpunkt bildbaren Hebel zu bilden, um die Anschlussleiste 100 durch Ausübung einer Kraft auf das Werkzeug in Aufsteckrichtung A zu versetzen.

Vorzugsweise ist der erste Auflageabschnitt 156 benachbart zu einer der Aufstecknuten 142 angeordnet. Vorzugsweise ist der Auflageabschnitt 156 durch einen Vorsatz gebildet, der von dem Gehäuse 140 in Erstreckungsrichtung oder entgegen der Erstreckungsrichtung vorsteht. Das Werkzeug kann ein Schraubendreher sein. Die Anschluss 100 kann mittels des Werkzeugs derart in Aufsteckrichtung A versetzt werden, dass die Teilstücke der Sammelschienen 200 von der Ausnehmung 146 in die Aufstecknut 142 gleiten.

Vorzugsweise umfasst das Gehäuse 140 wenigstens einen zweiten Auflageabschnitt 158, der geeignet ist, eine zweite Auflage für einen durch ein Werkzeug und einen benachbart zum Teilstück angeordneten Sammelschienenabschnitt 204 als Angelpunkt bildbaren Hebel zu bilden, um die Anschlussleiste 100 durch Ausübung einer Kraft auf das Werkzeug entgegen der Aufsteckrichtung A zu versetzen. Eine Ausübung einer Kraft auf den Hebel ermöglicht ein Verschieben der Anschlussleiste 100 entgegen der Aufsteckrichtung A, sodass die Teilstücke aus den Austecknuten 142 in die Ausnehmungen 146 gleiten können.

Wie in Figur 1 gezeigt, kann das Gehäuse 140 wenigstens einen Vorsprung 149 umfassen, der sich im Wesentlichen quer zur Aufsteckrichtung A und/oder parallel zur Erstreckungsrichtung erstreckt und den ersten Auflageabschnitt 156 sowie den zweiten Auflageabschnitt 158 umfasst. Dabei kann der Vorsprung 149 an einer Seitenwand 147 des Gehäuses 140 angeordnet sein und vorzugsweise einen annähernd kreisförmigen Querschnitt aufweisen.

In einer weiteren bevorzugten Ausgestaltung ist der Vorsprung 149 mit einer kragenförmigen Führungsvorrichtung 149a versehen, die zur Führung des Werkzeugs dient.

Vorzugsweise sind die verschiedenen Anschlusselemente 120 der Anschlussleiste 100 voneinander durch den gleichen Abstand beabstandet, durch welchen auch die Sammelschienen 200 voneinander beabstandet sind.

Die Anschlussleiste 100 kann mit einer Festlegeeinrichtung 190 versehen sein, welche einen Anliegeabschnitt 192 und einen Federabschnitt 194 aufweist. Der Federabschnitt 194 ist elastisch verformbar und der Anliegeabschnitt 192 geeignet, in einer Festlegestellung an der Sammelschiene 200 anzuliegen, um ein Verschieben der Anschlussleiste 100 entgegen der Aufsteckrichtung A zu verhindern. In einer figurlich nicht wiedergegebenen Freigabestellung ist der Anliegeabschnitt 192 von der Sammelschiene 200 beabstandet, um ein Verschieben der Anschlussleiste 100 entgegen der Aufsteckrichtung A zu ermöglichen.

Vorzugsweise ist die Festlegeeinrichtung 190 ferner mit einem Bedienungsabschnitt 196 versehen, mittels welchem ein Installateur die Festlegeeinrichtung 190 von der Festlegestellung in die Freigabestellung überführen kann.

Die Anschlusseinrichtung 10 nach dem Ausführungsbeispiel umfasst wenigstens ein Anschlusselement 20 zum Anschluss eines Leiters 300 an einer Sammelschiene 200 und ein das Anschlusselement 20 umgebendes Isolierstoffgehäuse 40. Das Anschlusselement 20 weist eine Leiterklemme 22 und eine mit der Leiterklemme 22 elektrisch verbundene Sammelschienenklemme 24 auf. Die Anschlusseinrichtung 10 ist durch eine Bewegung in einer Aufsteckrichtung A auf wenigstens eine Sammelschiene 200, die annähernd parallel zu einer Erstreckungsrichtung verläuft, aufsteckbar. Das Isolierstoffgehäuse 40 weist eine Aufstecknut 42 auf, die zur Aufnahme eines Teilstücks der Sammelschiene 200 geeignet ist. Die Sammelschienenklemme 24 weist wenigstens einen Schenkel 26 auf, der in die Aufstecknut 42 hineinragt und geeignet ist, mit dem Teilstück in Berührung gebracht zu werden. Die Anschlusseinrichtung 10 ist ausgebildet, um an einer Anschlussleiste 100 und/oder an einer Festlegevorrichtung 60 und/oder an einer weiteren Anschlusseinrichtung 10 und/oder an einer Wand eines Gehäuses einer Verteilereinrichtung festgelegt zu werden.

Das Anschlusselement 20 der Anschlusseinrichtung 10 kann baugleich mit dem Anschlusselement 120 der Anschlussleisten 100 sein.

Vorzugsweise ist die Leiterklemme 22 und/oder die Sammelschienenklemme 24 als Klemmelement ausgebildet.

In einer bevorzugten Ausgestaltung weist das Isolierstoffgehäuse 40 gegenüberliegend von der Leiterklemme 22 des Anschlusselements 20 eine Einstecköffnung 44 auf, die geeignet ist, von dem Leiter 300 durchdrungen zu werden, um den Leiter 300 mit der Leiterklemme 22 elektrisch leitend zu verbinden.

Vorzugsweise ist die Leiterklemme 22 und/oder die Einstecköffnung 44 ausgebildet ist, um eine Einstecken des Leiters 300 in die Leiterklemme 22 in einer Einsteckrichtung L zu ermöglichen, wobei die Einsteckrichtung L im Wesentlichen in einer Ebene liegt, die im Wesentlichen orthogonal zur Erstreckungsrichtung verläuft, und wobei die Einsteckrichtung L und die Aufsteckrichtung A einen Winkel α bilden, der zwischen 30° und 150°, vorzugsweise zwischen 90° und 150°, weiterhin vorzugsweise ca. 120° aufweist.

In einer bevorzugten Ausgestaltung weist das Isolierstoffgehäuse 40 wenigstens eine Ausnehmung 46 auf, in welche die Aufstecknut 42 mündet.

Vorzugsweise weist das Isolierstoffgehäuse 40 wenigstens eine Einführschräge 48 auf, die in die Ausnehmung 46 einer benachbart zu der Anschlusseinrichtung 10 angeordneten weiteren Anschlusseinrichtung 10 mündet und geeignet ist, das Teilstück in die Ausnehmung 46 der weiteren Anschlusseinrichtung 10 zu führen.

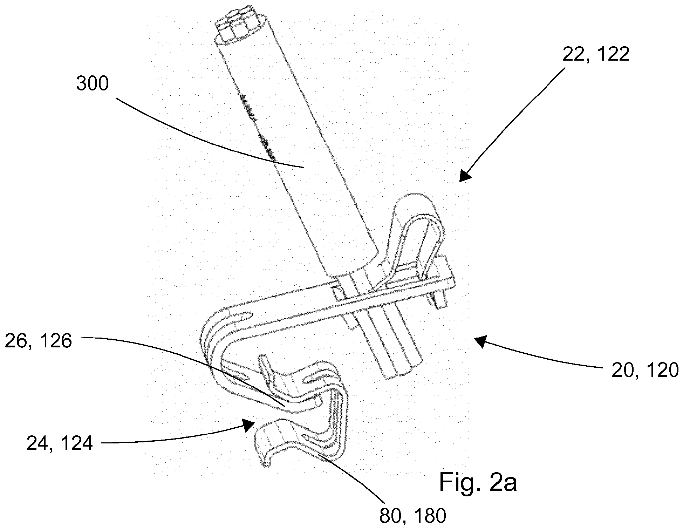

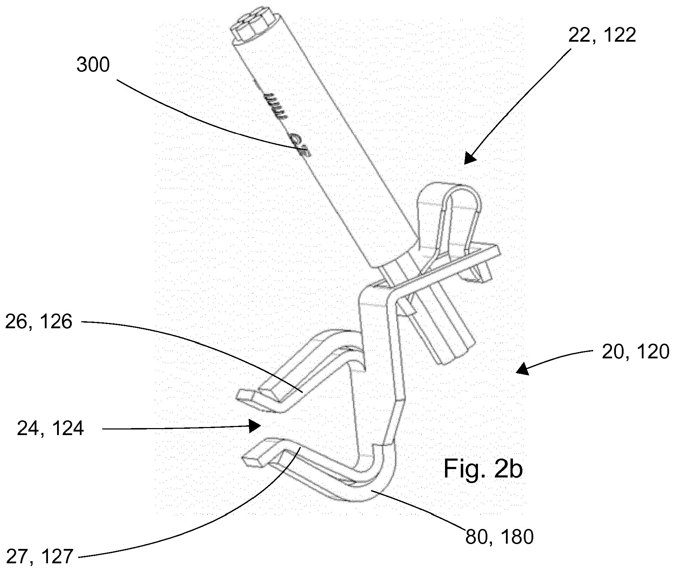

Vorzugsweise umfasst das Anschlusselement 20, 120 ein Verstärkungselement 80, 180, dass die Sammelschienenklemme 24, 124 zumindest teilweise umgibt und vorzugsweise aus Stahl gefertigt ist. Das Verstärkungselement 80, 180 ist insbesondere in den Figuren 2a und 2b in zwei unterschiedlichen Varianten des Anschlusselements 20, 120 wiedergegeben. Gemäß diesen Varianten ist das Verstärkungselement 80, 180 im Wesentlichen schwalbenschwanzförmig ausgebildet. Alternativ kann das Verstärkungselement 80, 180 auch omegaförmig oder rechteckförmig ausgebildet sein.

Ebenso ist gemäß dem Ausführungsbeispiel die Sammelschienenklemme 24 der Anschlusseinrichtung 10 schwalbenschwanzförmig ausgebildet. Die Sammelschieneklemme 24 kann jedoch auch omegaförmig oder rechteckförmig ausgebildet sein.

Gemäß der in Figur 2a wiedergegebenen Variante des Anschlusselements 20, 120 kann die Sammelschienenklemme 24, 124 mit einem ersten Schenkel 26, 126 versehen sein und in der in Figur 2b wiedergegebenen Variante des Anschlusselements 20, 120 zusätzlich mit einem zweiten Schenkel 27, 127 versehen sein. Zwischen dem ersten Schenkel 26, 126 und dem zweiten Schenkel 27, 127 kann das Teilstück der Sammelschiene 200 angeordnet sein, um das Anschlusselement 20, 120 elektrisch leitend mit der Sammelschiene 200 zu verbinden. Gemäß der Variante aus Figur 2b umgibt das Verstärkungselement 80, 180 den ersten Schenkel 26 und den zweiten Schenkel 27 der Sammelschienenklemme 24.

Gemäß der in Figur 2a wiedergegebenen Variante der Sammelschienenklemme 24, 124 weist diese nur einen Schenkel 26, 126 auf. Um ein Anliegen des ersten Schenkels 26, 126 an dem Teilstück der Sammelschiene 200 zur Übertragung von elektrischer Energie zwischen dem Anschlusselement 20, 120 und der Sammelschiene 200 zu gewährleisten, ist die Sammelschienenklemme 24, 124 mit einem Verstärkungselement 80, 180 versehen, welches zwei Schenkel umfasst, wobei einer der Schenkel an der Sammelschiene 200 anliegt und der andere der Schenkel ausgebildet ist, um den ersten Schenkel 26, 126 der Sammelschienenklemme 24, 124 an das Teilstück der Sammelschiene 200 zu drücken.

Vorzugsweise umfasst die Anschlusseinrichtung 10 wenigstens ein Verbindungselement 70, welches in einer durch Nebeneinanderstellung einer in dem Isolierstoffgehäuse 40 eingebrachten ersten Aussparung 51 und einer in der Festlegevorrichtung 60 und/oder in einem Isolierstoffgehäuse 40 der weiteren Anschlusseinrichtung 10 und/oder in der Anschlussleiste 100 und/oder in der Wand des Gehäuses der Verteilereinrichtung eingebrachten zweiten Aussparung 63 gebildete Vertiefung 71 aufgenommen ist, um die Anschlusseinrichtung 10 mit der Festlegevorrichtung 60 und/oder der Anschlussleiste 100 und/oder der weiteren Anschlusseinrichtung 10 und/oder der Wand des Gehäuses der Verteilereinrichtung zu verbinden.

In einer bevorzugten Ausgestaltung erstreckt sich die erste Aussparung 51 und/oder die zweite Aussparung 63 und/oder die Vertiefung 71 im Wesentlichen in einer Richtung, die bezüglich der Aufsteckrichtung A windschief ist oder diese schneidet.

Vorzugsweise ist die erste Aussparung 51 in einer Seitenwand 47 des Isolierstoffgehäuses 40 eingebracht.

Vorzugsweise ist das erste Isolierstoffgehäuse 40 mit dem Gehäuse 140 mittels einer Nut-Feder-Verbindung verbindbar.

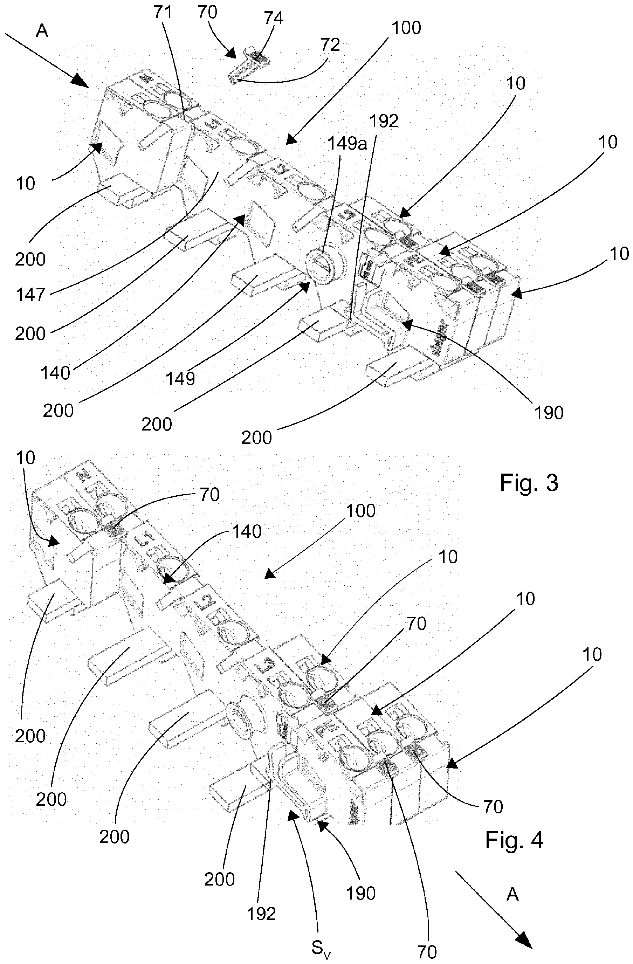

Eine mit insgesamt vier Anschlusseinrichtungen 10 versehene Anschlussleiste 100 ist beispielsweise in den Figuren 3 und 4 offenbart.

Alternativ oder zusätzlich kann die Anschlusseinrichtung 10 mit dem Gehäuse 140 verbunden sein, in dem die Anschlusseinrichtung 10 mit einer weiteren Anschlusseinrichtung 10 verbunden ist. Gemäß diesen Merkmalen kann also die Anschlusseinrichtung 10 mittelbar über eine weitere Anschlusseinrichtung 10 mit dem Gehäuse 140 verbunden sein.

Diese Ausgestaltung ermöglicht ein einfaches Erweitern der Anschlussleiste 100 um weitere Anschlusselemente 20.

Zur Verbindung der Anschlusseinrichtung 10 mit dem Gehäuse 140 der Anschlussleiste 100 wird zunächst die Anschlusseinrichtung 10 derart neben dem Gehäuse 140 angeordnet, dass die erste Aussparung 51 der zweiten Aussparung 63 gegenüberliegt und die Vertiefung 71 bildet. Anschließend wird ein Verbindungselement 70 in die Vertiefung 71 eingeführt.

Das Verbindungselement 70 kann einen Einführabschnitt 72 umfassen, der in der Vertiefung 71 aufgenommen werden kann, um das Gehäuse 140 mit der Anschlusseinrichtung 10 beziehungsweise dem Isolierstoffgehäuse 440 formschlüssig zu verbinden.

Ferner kann das Verbindungselement 70 einen Greifabschnitt 74 umfassen, mittels welchem das Verbindungselement 70 in einfacher Weise aus der Vertiefung 71 herausgezogen werden kann, um die Anschlusseinrichtung 10 von dem Gehäuse 140 zu trennen.

Das Ausführungsbeispiel betriff ferner eine Anschlussvorrichtung 1 umfassend eine Festlegevorrichtung 60 und wenigstens eine Anschlusseinrichtung 10, wobei die Anschlusseinrichtung 10 an der Festlegevorrichtung 60 festgelegt ist, wobei die Festlegevorrichtung 60 mit wenigstens einer Aufstecknut 64 zur Aufnahme eines Teilstücks der Sammelschiene 200 versehen ist und wobei die Aufstecknut 64 der Festlegevorrichtung 60 der Aufstecknut 42 der Anschlusseinrichtung 10 gegenüberliegt und vorzugsweise einen annähernd gleichen Querschnitt wie die Aufstecknut 42 der Anschlusseinrichtung 10 aufweist.

Vorzugsweise weist die Festlegevorrichtung 60 wenigstens eine Ausnehmung 65 auf, welche in die Aufstecknut 64 der Festlegevorrichtung 60 mündet, wobei die Ausnehmung 65 der Festlegevorrichtung 60 der Ausnehmung 46 der Anschlusseinrichtung 10 gegenüberliegt und vorzugsweise einen annähernd gleichen Querschnitt wie die Ausnehmung 46 der Anschlusseinrichtung 10 aufweist.

Vorzugsweise weist die Festlegevorrichtung 60 wenigstens eine Einführschräge 66 auf, welche in die Ausnehmung 65 der Festlegevorrichtung 60 mündet, wobei die Einführschräge 66 der Festlegevorrichtung 60 der Einführschräge 48 der Anschlusseinrichtung 10 gegenüberliegt und vorzugsweise einen annähernd gleichen Querschnitt wie die Einführschräge 48 der Anschlusseinrichtung 10 aufweist.

Vorzugsweise ist die Anschlusseinrichtung 10 an einer Seitenwand 61 der Festlegevorrichtung 60 festlegbar. Vorzugsweise ist die zweite Aussparung 63 an der Seitenwand 61 angeordnet.

In einer bevorzugten Ausgestaltung der Anschlussvorrichtung 1 umfasst diese wenigstens zwei Anschlusseinrichtungen 10, wobei die Anschlusseinrichtungen 10 in Aufsteckrichtung A hintereinander und/oder zumindest annähernd aneinandergrenzend angeordnet sind, wobei die Einführschräge 48 eines der Anschlusseinrichtungen 10 in die Ausnehmung 46 der weiteren Anschlusseinrichtung 10 mündet und geeignet ist, das Teilstück in die Ausnehmung 46 der weiteren Anschlusseinrichtung 10 zu führen.

Vorzugsweise ist das Verbindungselement 70 in der durch Nebeneinanderstellung der in dem Isolierstoffgehäuse 40 eingebrachten ersten Aussparung 51 und der in der Festlegevorrichtung 60 eingebrachten zweiten Aussparung 63 gebildete Vertiefung 71 aufgenommen, um die Anschlusseinrichtung 10 an der Festlegevorrichtung 60 festzulegen.

In einer bevorzugten Ausgestaltung weist die Festlegevorrichtung 60 wenigstens eine Festlegeeinrichtung 90 auf, welche einen Anliegeabschnitt 92 und einen Federabschnitt 94 umfasst, wobei der Federabschnitt 94 elastisch verformbar ist und wobei der Anliegeabschnitt 92 geeignet ist, in einer Festlegestellung an der Sammelschiene 200 anzuliegen, um ein Verschieben der Anschlussvorrichtung 10 entgegen der Aufsteckrichtung A zu verhindern, und in einer Freigabestellung von der Sammelschiene 200 beabstandet zu sein, um ein Verschieben der Anschlussvorrichtung 10 entgegen der Aufsteckrichtung A zu ermöglichen.

Vorzugsweise weist die Festlegevorrichtung 60 wenigstens eine Sollbruchstelle 62 auf, die sich vorzugsweise im Wesentlichen quer zur Aufsteckrichtung und/oder quer zur Erstreckungsrichtung erstreckt. Gemäß dieser Ausgestaltung ist es möglich, die Festlegevorrichtung 60 in einfacher Weise derart zu kürzen, sodass mittels dieser eine Anschlussvorrichtung 1 der gewünschten Länge (in Aufsteckrichtung A) gebildet werden kann, die beispielsweise mit einer einzigen Sammelschiene 200 oder mit einer Mehrzahl an Sammelschienen 200 verbindbar ist.

Vorzugsweise ist die Festlegevorrichtung 60 ausgebildet, um durch eine Verschiebung der Festlegevorrichtung 60 in der Aufsteckrichtung A das Teilstück in die Aufstecknut 64 aufzunehmen.

Vorzugsweise bilden die Aufstecknut 42 der Anschlusseinrichtung(en) 10 zusammen mit den Aufstecknuten 64 der Festlegevorrichtung 60 Aufstecknuten der Anschlussvorrichtung 1 gemäß diesem Ausführungsbeispiel.

Vorzugsweise ist das Teilstück formschlüssig und/oder kraftschlüssig in der Aufstecknut 42, 64 aufgenommen.

Vorzugsweise ist die Festlegeeinrichtung 90 ferner mit einem Bedienungsabschnitt 96 versehen, mittels welchem ein Installateur die Festlegeeinrichtung 90 von der Festlegestellung in die Freigabestellung überführen kann.

Gemäß dieser Variante kann die Anschlussvorrichtung 1 in einfacher Weise an die in der Verteilereinrichtung vorherrschenden Anforderungen angepasst werden.

Vorzugsweise sind die Leiterklemmen 122 der Anschlussleiste 100 und/oder die Leiterklemme 22 der Anschlusseinrichtung 10 dazu geeignet, mit einem Leiter 300, der einen Querschnitt aufweist, verbunden zu werden. Vorzugsweise weist der Querschnitt der Leiter 300 eine Fläche auf, die zwischen ca. 10 mm² und ca. 35 mm² liegt. In einer bevorzugten Ausgestaltung weist der Querschnitt des Leiters 300 einen Durchmesser auf, der zwischen ca. 1,0 mm und ca. 7 mm beträgt.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.^

### Bezugszeichenliste

- 1: Anschlussvorrichtung
- 10: Anschlusseinrichtung
- 20: Anschlusselement
- 22: Leiterklemme
- 24: Sammelschienenklemme
- 26: erster Schenkel
- 27: zweiter Schenkel
- 40: Isolierstoffgehäuse
- 42: Aufstecknut
- 46: Ausnehmung
- 47: Seitenwand
- 48: Einführschräge
- 51: erste Aussparung
- 60: Festlegevorrichtung
- 61: Seitenwand
- 62: Sollbruchstelle
- 63: zweite Aussparung
- 64: Aufstecknut
- 65: Ausnehmung
- 66: Einführschräge
- 70: Verbindungselement
- 71: Vertiefung
- 72: Einführabschnitt
- 74: Greifabschnitt
- 80: Verstärkungselement
- 90: Festlegeeinrichtung
- 92: Anliegeabschnitt
- 94: Federabschnitt
- 96: Bedienungsabschnitt
- 100: Anschlussleiste
- 120: Anschlusselement
- 122: Leiterklemme
- 124: Sammelschienenklemme
- 126: erster Schenkel
- 127: zweiter Schenkel
- 140: Gehäuse
- 142: Aufstecknut
- 144: Einstecköffnung
- 146: Ausnehmung
- 147: Seitenwand
- 148: Einführschräge
- 149: Vorsprung
- 149a: kragenförmige Führungsvorrichtung
- 156: erster Auflageabschnitt
- 158: zweiter Auflageabschnitt
- 190: Festlegeeinrichtung
- 192: Anliegeabschnitt
- 194: Federabschnitt
- 196: Bedienungsabschnitt
- 200: Sammelschiene
- 204: Sammelschienenabschnitt
- 300: Leiter
- A: Aufsteckrichtung
- V: Verschieberichtung
- S_{V}: Verschlussstellung

## Patentansprüche

1. Anschlusseinrichtung umfassend wenigstens ein Anschlusselement (20) zum Anschluss eines Leiters (300) an einer Sammelschiene (200) und ein das Anschlusselement (20) umgebendes Isolierstoffgehäuse (40),
wobei das Anschlusselement (20) eine Leiterklemme (22) und eine mit der Leiterklemme (22) elektrisch verbundene Sammelschienenklemme (24) aufweist,
wobei die Anschlusseinrichtung (10) durch eine Bewegung in einer Aufsteckrichtung (A) auf wenigstens eine Sammelschiene (200), die annähernd parallel zu einer Erstreckungsrichtung verläuft, aufsteckbar ist,
wobei das Isolierstoffgehäuse (40) eine Aufstecknut (42) aufweist, die zur Aufnahme eines Teilstücks der Sammelschiene (200) geeignet ist,
wobei die Sammelschienenklemme (24) wenigstens einen Schenkel (26) aufweist, der in die Aufstecknut (42) hineinragt und geeignet ist, mit dem Teilstück in Berührung gebracht zu werden, **dadurch gekennzeichnet dass** die Anschlusseinrichtung ausgebildet ist, um an einer Anschlussleiste (100) und/oder an einer Festlegevorrichtung (60) und/oder an einer weiteren Anschlusseinrichtung (10) und/oder an einer Wand eines Gehäuses einer Verteilereinrichtung festgelegt zu werden und
wobei die Anschlusseinrichtung (10) wenigstens ein Verbindungselement (70) umfasst, welches in einer durch Nebeneinanderstellung einer in einer Seitenwand (47) des Isolierstoffgehäuses (40) eingebrachten ersten Aussparung (51) und einer in der Festlegevorrichtung (60) und/oder in einem Isolierstoffgehäuse (40) der weiteren Anschlusseinrichtung (10) und/oder in der Anschlussleiste (100) und/oder in der Wand des Gehäuses der Verteilereinrichtung eingebrachten zweiten Aussparung (63) gebildete Vertiefung (71) aufgenommen ist, um die Anschlusseinrichtung (10) mit der Festlegevorrichtung (60) und/oder der Anschlussleiste (100) und/oder der weiteren Anschlusseinrichtung (10) und/oder der Wand des Gehäuses der Verteilereinrichtung zu verbinden.

2. Anschlusseinrichtung nach Anspruch 1, **dadurch gekennzeichnet, dass** das Isolierstoffgehäuse (40) gegenüberliegend von der Leiterklemme (22) des Anschlusselements (20) eine Einstecköffnung (44) aufweist, die geeignet ist, von dem Leiter (300) durchdrungen zu werden, um den Leiter (300) mit der Leiterklemme (22) elektrisch leitend zu verbinden.

3. Anschlusseinrichtung nach einem der Ansprüche 1 oder 2, **dadurch gekennzeichnet, dass** die Leiterklemme (22) und/oder die Einstecköffnung (44) ausgebildet ist, um eine Einstecken des Leiters (300) in die Leiterklemme (22) in einer Einsteckrichtung (L) zu ermöglichen, wobei die Einsteckrichtung (L) im Wesentlichen in einer Ebene liegt, die im Wesentlichen orthogonal zur Erstreckungsrichtung verläuft, und wobei die Einsteckrichtung (L) und die Aufsteckrichtung (A) einen Winkel (α) bilden, der zwischen 30° und 150°, vorzugsweise zwischen 90° und 150°, weiterhin vorzugsweise ca. 120° aufweist.

4. Anschlusseinrichtung nach einem der Ansprüche 1 bis 3, **dadurch gekennzeichnet, dass** das Isolierstoffgehäuse (40) wenigstens eine Ausnehmung (46) aufweist, in welche die Aufstecknut (42) mündet.

5. Anschlusseinrichtung nach Anspruch 4, **dadurch gekennzeichnet, dass** das Isolierstoffgehäuse (40) wenigstens eine Einführschräge (48) aufweist, die in die Ausnehmung (46) einer benachbart zu der Anschlusseinrichtung (10) angeordneten weiteren Anschlusseinrichtung (10) mündet und geeignet ist, das Teilstück in die Ausnehmung (46) der weiteren Anschlusseinrichtung (10) zu führen.

6. Anschlusseinrichtung nach einem der Ansprüche 1 bis 5, **dadurch gekennzeichnet, dass** sich die erste Aussparung (51) und/oder die zweite Aussparung (63) und/oder die Vertiefung (71) im Wesentlichen in einer Richtung erstreckt, die bezüglich der Aufsteckrichtung (A) windschief ist oder diese schneidet.

7. Anschlussvorrichtung umfassend eine Festlegevorrichtung (60) und wenigstens eine Anschlusseinrichtung (10) nach einem der vorangehenden Ansprüche, wobei die Anschlusseinrichtung (10) an der Festlegevorrichtung (60) festgelegt ist, wobei die Festlegevorrichtung (60) mit wenigstens einer Aufstecknut (64) zur Aufnahme eines Teilstücks der Sammelschiene (200) versehen ist und wobei die Aufstecknut (64) der Festlegevorrichtung (60) der Aufstecknut (42) der Anschlusseinrichtung (10) gegenüberliegt und vorzugsweise einen annähernd gleichen Querschnitt wie die Aufstecknut (42) der Anschlusseinrichtung (10) aufweist.

8. Anschlussvorrichtung nach Anspruch 7, **dadurch gekennzeichnet, dass** die Festlegevorrichtung (60) wenigstens eine Ausnehmung (65) aufweist, welche in die Aufstecknut (64) der Festlegevorrichtung (60) mündet, wobei die Ausnehmung (65) der Festlegevorrichtung (60) der Ausnehmung (46) der Anschlusseinrichtung (10) gegenüberliegt und vorzugsweise einen annähernd gleichen Querschnitt wie die Ausnehmung (46) der Anschlusseinrichtung (10) aufweist.

9. Anschlussvorrichtung nach einem der Ansprüche 7 oder 8, **gekennzeichnet durch** wenigstens zwei Anschlusseinrichtungen (10), , wobei die Anschlusseinrichtungen (10) in Aufsteckrichtung (A) hintereinander und/oder zumindest annähernd aneinandergrenzend angeordnet sind, wobei die Einführschräge (48) eines der Anschlusseinrichtungen (10) in die Ausnehmung (46) der weiteren Anschlusseinrichtung (10) mündet und geeignet ist, das Teilstück in die Ausnehmung (46) der weiteren Anschlusseinrichtung (10) zu führen.

10. Anschlussvorrichtung nach einem der Ansprüche 7 bis 9, **dadurch gekennzeichnet, dass** das Verbindungselement (70) in der durch Nebeneinanderstellung der in dem Isolierstoffgehäuse (40) eingebrachten ersten Aussparung (51) und der in der Festlegevorrichtung (60) eingebrachten zweiten Aussparung (63) gebildete Vertiefung (71) aufgenommen ist, um die Anschlusseinrichtung (10) an der Festlegevorrichtung (60) festzulegen.

11. Anschlussvorrichtung nach einem der Ansprüche 7 bis 10, **dadurch gekennzeichnet, dass** die Festlegevorrichtung (60) wenigstens eine Festlegeeinrichtung (90) aufweist, welche einen Anliegeabschnitt (92) und einen Federabschnitt (94) umfasst, wobei der Federabschnitt (94) elastisch verformbar ist und wobei der Anliegeabschnitt (92) geeignet ist, in einer Festlegestellung an der Sammelschiene (200) anzuliegen, um ein Verschieben der Anschlussvorrichtung (10) entgegen der Aufsteckrichtung (A) zu verhindern, und in einer Freigabestellung von der Sammelschiene (200) beabstandet zu sein, um ein Verschieben der Anschlussvorrichtung (10) entgegen der Aufsteckrichtung (A) zu ermöglichen.

12. Anschlussvorrichtung nach einem der Ansprüche 7 bis 11, **dadurch gekennzeichnet, dass** die Festlegevorrichtung (60) wenigstens eine Sollbruchstelle (62) aufweist, die sich vorzugsweise im Wesentlichen quer zur Aufsteckrichtung und/oder quer zur Erstreckungsrichtung erstreckt.

## Claims

1. Connection device, comprising at least one connection element (20) for connecting a conductor (300) to a busbar (200) and an insulating material housing (40) surrounding the connection element (20),
wherein the connection element (20) has a conductor terminal (22) and a busbar terminal (24), which is electrically connected to the conductor terminal (22),
wherein the connection device (10) can be plugged onto at least one busbar (200), which runs approximately parallel to a direction of extent, by means of a movement in a plugging-on direction (A),
wherein the insulating material housing (40) has a plug-on groove (42) which is suitable for receiving a subsection of the busbar (200), wherein the busbar terminal (24) has at least one limb (26) which projects into the plug-on groove (42) and is suitable for being placed in contact with the subsection,
**characterized in that** the connection device is designed to be secured to a connection strip (100) and/or to a securing apparatus (60) and/or to a further connection device (10) and/or to a wall of a housing of a distributor device, and
wherein the connection device (10) comprises at least one connecting element (70) which is received in a depression (71) formed by juxtaposition of a first cutout (51), made in a side wall (47) of the insulating material housing (40), and a second cutout (63), made in the securing apparatus (60) and/or in an insulating material housing (40) of the further connection device (10) and/or in the connection strip (100) and/or in the wall of the housing of the distributor device, in order to connect the connection device (10) to the securing apparatus (60) and/or to the connection strip (100) and/or to the further connection device (10) and/or to the wall of the housing of the distributor device.

2. Connection device according to Claim 1, **characterized in that** the insulating material housing (40) has an insertion opening (44) opposite the conductor terminal (22) of the connection element (20), which insertion opening (44) is suitable for being penetrated by the conductor (300), in order to connect the conductor (300) to the conductor terminal (22) in an electrically conductive manner.

3. Connection device according to either of Claims 1 and 2, **characterized in that** the conductor terminal (22) and/or the insertion opening (44) are/is designed to permit the conductor (300) to be inserted into the conductor terminal (22) in an insertion direction (L), wherein the insertion direction (L) substantially lies in a plane which runs substantially orthogonally with respect to the direction of extent, and wherein the insertion direction (L) and the plugging-on direction (A) form an angle (α) which is between 30° and 150°, preferably between 90° and 150°, more preferably is approximately 120°.

4. Connection device according to one of Claims 1 to 3, **characterized in that** the insulating material housing (40) has at least one recess (46), into which the plug-on groove (42) opens.

5. Connection device according to Claim 4, **characterized in that** the insulating material housing (40) has at least one introducing slope (48), which opens into the recess (46) in a further connection device (10) arranged adjacent to the connection device (10), and is suitable for guiding the subsection into the recess (46) in the further connection device (10).

6. Connection device according to one of Claims 1 to 5, **characterized in that** the first cutout (51) and/or the second cutout (63) and/or the depression (71) extend/extends substantially in a direction which is skewed with respect to the plugging-on direction (A) or intersects the latter.

7. Connection apparatus comprising a securing apparatus (60) and at least one connection device (10) according to one of the preceding claims, wherein the connection device (10) is secured on the securing apparatus (60), wherein the securing apparatus (60) is provided with at least one plug-on groove (64) for receiving a subsection of the busbar (200), and wherein the plug-on groove (64) of the securing apparatus (60) lies opposite the plug-on groove (42) of the connection device (10) and preferably has an approximately identical cross section to the plug-on groove (42) of the connection device (10).

8. Connection apparatus according to Claim 7, **characterized in that** the securing apparatus (60) has at least one recess (65) which opens into the plug-on groove (64) of the securing apparatus (60), wherein the recess (65) in the securing apparatus (60) lies opposite the recess (46) in the connection device (10) and preferably has an approximately identical cross section to the recess (46) in the connection device (10).

9. Connection apparatus according to either of Claims 7 and 8, **characterized by** at least two connection devices (10), wherein the connection devices (10) are arranged one behind the other and/or at least approximately adjacent to one another in the plugging-on direction (A), wherein the introducing slope (48) of one of the connection devices (10) opens into the recess (46) in the further connection device (10) and is suitable for guiding the subsection into the recess (46) in the further connection device (10).

10. Connection apparatus according to one of Claims 7 to 9, **characterized in that** the connecting element (70) is received in the depression (71) formed by juxtaposition of the first cutout (51), made in the insulating material housing (40), and the second cutout (63), made in the securing apparatus (60), in order to secure the connection device (10) on the securing apparatus (60).

11. Connection apparatus according to one of Claims 7 to 10, **characterized in that** the securing apparatus (60) has at least one securing device (90) which comprises a bearing section (92) and a spring section (94), wherein the spring section (94) can be deformed elastically, and wherein the bearing section (92) is suitable for bearing in a securing position against the busbar (200), in order to prevent the connection apparatus (10) from moving counter to the plugging-on direction (A), and in order to be spaced apart from the busbar (200) in a release position, in order to permit the connection apparatus (10) to move counter to the plugging-on direction (A).

12. Connection apparatus according to one of Claims 7 to 11, **characterized in that** the securing apparatus (60) has at least one predetermined breaking point (62) which preferably extends substantially transversely with respect to the plugging-on direction and/or transversely with respect to the direction of extent.

## Revendications

1. Appareil de raccordement comprenant au moins un élément de raccordement (20) pour le raccordement d'un conducteur (300) à une barre omnibus (200) et un boîtier de matière isolante (40) entourant l'élément de raccordement (20),
l'élément de raccordement (20) comprenant une borne de conducteur (22) et une borne de barre omnibus (24) reliée électriquement avec la borne de conducteur (22),
l'appareil de raccordement (10) pouvant être monté par un mouvement dans une direction de montage (A) sur au moins une barre omnibus (200), qui est approximativement parallèle à une direction d'extension,
le boîtier de matière isolante (40) comprenant une rainure de montage (42), qui est appropriée pour le logement d'un segment de la barre omnibus (200),
la borne de barre omnibus (24) comprenant au moins une branche (26), qui pénètre dans la rainure de montage (42) et est appropriée pour être mise en contact avec le segment,
**caractérisé en ce que**
l'appareil de raccordement est configuré pour être fixé sur une barrette de raccordement (100) et/ou sur un dispositif de fixation (60) et/ou sur un appareil de raccordement supplémentaire (10) et/ou sur une paroi d'un boîtier d'un appareil de distribution, et
l'appareil de raccordement (10) comprend au moins un élément de liaison (70), qui est logé dans un creux (71) formé par juxtaposition d'un premier évidement (51) aménagé dans une paroi latérale (47) du boîtier de matière isolante (40) et d'un deuxième évidement (63) aménagé dans le dispositif de fixation (60) et/ou dans un boîtier de matière isolante (40) de l'appareil de raccordement supplémentaire (10) et/ou dans la barrette de raccordement (100) et/ou dans la paroi du boîtier d'appareil de distribution, afin de relier l'appareil de raccordement (10) avec le dispositif de fixation (60) et/ou la barrette de raccordement (100) et/ou l'appareil de raccordement supplémentaire (10) et/ou la paroi du boîtier de l'appareil de distribution.

2. Appareil de raccordement selon la revendication 1, **caractérisé en ce que** le boîtier de matière isolante (40) comprend une ouverture d'enfichage (44) opposée à la borne de conducteur (22) de l'élément de raccordement (20), qui est appropriée pour être traversée par le conducteur (300), afin de relier de manière électriquement conductrice le conducteur (300) avec la borne de conducteur (22).

3. Appareil de raccordement selon l'une quelconque des revendications 1 ou 2, **caractérisé en ce que** la borne de conducteur (22) et/ou l'ouverture d'enfichage (44) sont configurées pour permettre un enfichage du conducteur (300) dans la borne de conducteur (22) dans une direction d'enfichage (L), la direction d'enfichage (L) se situant essentiellement dans un plan qui est essentiellement orthogonal à la direction d'extension, et la direction d'enfichage (L) et la direction de montage (A) formant un angle (α), qui est compris entre 30° et 150°, de préférence entre 90° et 150°, de manière davantage préférée est d'environ 120°.

4. Appareil de raccordement selon l'une quelconque des revendications 1 à 3, **caractérisé en ce que** le boîtier de matière isolante (40) comprend au moins un retrait (46), dans lequel la rainure de montage (42) débouche.

5. Appareil de raccordement selon la revendication 4, **caractérisé en ce que** le boîtier de matière isolante (40) comprend au moins une rampe d'introduction (48), qui débouche dans le retrait (46) d'un appareil de raccordement supplémentaire (10) agencé à côté de l'appareil de raccordement (10), et est appropriée pour guider le segment dans le retrait (46) de l'appareil de raccordement supplémentaire (10).

6. Appareil de raccordement selon l'une quelconque des revendications 1 à 5, **caractérisé en ce que** le premier évidement (51) et/ou le deuxième évidement (63) et/ou le creux (71) s'étendent essentiellement dans une direction, qui est de travers par rapport à la direction de montage (A) ou coupe celle-ci.

7. Dispositif de raccordement comprenant un dispositif de fixation (60) et au moins un appareil de raccordement (10) selon l'une quelconque des revendications précédentes, l'appareil de raccordement (10) étant fixé sur le dispositif de fixation (60), le dispositif de fixation (60) étant muni d'au moins une rainure de montage (64) pour le logement d'un segment de la barre omnibus (200) et la rainure de montage (64) du dispositif de fixation (60) étant opposée à la rainure de montage (42) de l'appareil de raccordement (10) et présentant de préférence une section transversale approximativement identique à la rainure de montage (42) de l'appareil de raccordement (10).

8. Dispositif de raccordement selon la revendication 7, **caractérisé en ce que** le dispositif de fixation (60) comprend au moins un retrait (65), qui débouche dans la rainure de montage (64) du dispositif de fixation (60), le retrait (65) du dispositif de fixation (60) étant opposé au retrait (46) de l'appareil de raccordement (10) et présentant de préférence une section transversale approximativement identique au retrait (46) de l'appareil de raccordement (10).

9. Dispositif de raccordement selon l'une quelconque des revendications 7 ou 8, **caractérisé par** au moins deux appareils de raccordement (10), les appareils de raccordement (10) étant agencés les uns après les autres et/ou de manière au moins approximativement contiguë dans la direction de montage (A), la rampe d'introduction (48) d'un des appareils de raccordement (10) débouchant dans le retrait (46) de l'appareil de raccordement supplémentaire (10) et étant appropriée pour guider le segment dans le retrait (46) de l'appareil de raccordement supplémentaire (10).

10. Dispositif de raccordement selon l'une quelconque des revendications 7 à 9, **caractérisé en ce que** l'élément de liaison (70) est logé dans le creux (71) formé par juxtaposition du premier évidement (51) aménagé dans le boîtier de matière isolante (40) et du deuxième évidement (63) aménagé dans le dispositif de fixation (60), afin de fixer l'appareil de raccordement (10) sur le dispositif de fixation (60).

11. Dispositif de raccordement selon l'une quelconque des revendications 7 à 10, **caractérisé en ce que** le dispositif de fixation (60) comprend au moins un appareil de fixation (90), qui comprend une section d'application (92) et une section de ressort (94), la section de ressort (94) étant déformable élastiquement et la section d'application (92) étant appropriée pour s'appliquer sur la barre omnibus (200) dans une position de fixation, afin d'empêcher un déplacement du dispositif de raccordement (10) à l'encontre de la direction de montage (A), et pour être espacée de la barre omnibus (200) dans une position de libération, afin de permettre un déplacement du dispositif de raccordement (10) à l'encontre de la direction de montage (A).

12. Dispositif de raccordement selon l'une quelconque des revendications 7 à 11, **caractérisé en ce que** le dispositif de fixation (60) comprend au moins une zone destinée à la rupture (62), qui s'étend de préférence essentiellement perpendiculairement à la direction de montage et/ou perpendiculairement à la direction d'extension.
